# EUROPÄISCHE PATENTSCHRIFT

(11) **EP 0 923 985 B1**
(45) Veröffentlichungstag und Bekanntmachung des Hinweises auf die Patenterteilung: **19.09.2001**
(21) Anmeldenummer: 98123746.4
(22) Anmeldetag: 14.12.1998
(51) Int. Cl.: B01F 3/02, B01D 3/16, B01D 1/16

(54) **Vorrichtung zum Verdampfen von Flüssigkeiten und zum Herstellen von Gas/Dampfgemischen**
Device for vaporising liquid feed and for making gas vapour mixtures
Dispositif de vaporisation de liquide et pour la fabrication de mélanges gaz-vapeur

(30) Priorität: 15.12.1997 DE 19755643
(43) Veröffentlichungstag der Anmeldung: 23.06.1999
(73) Patentinhaber: Schmäh, Martin Dr., 60487 Frankfurt (Main) (DE)
(72) Erfinder: Schmäh, Martin Dr., 60487 Frankfurt (Main) (DE)
(74) Vertreter: Olbricht, Karl Heinrich, Dipl.-Phys.

(56) Entgegenhaltungen:
- EP-A- 0 533 201
- EP-A- 0 559 259
- EP-A- 0 602 595
- DE-A- 2 151 007
- US-A- 5 372 754

## Beschreibung

Die Erfindung betrifft eine Vorrichtung zum Verdampfen von Flüssigkeit und zum Herstellen von Gas/Dampf-Gemischen definierter Zusammensetzung gemäß dem Oberbegriff von Anspruch 1.

In der Verfahrens- und Analysentechnik ist es häufig notwendig, Prozeßgase zu befeuchten oder mit einer definierten Menge einer verdampfbaren Substanz zu beladen. Mit einem Gas genau definierter Zusammensetzung überprüfte und kalibrierte Gasanalysegeräte werden zur Überwachung solcher Prozesse eingesetzt. Die Gas/Dampf-Gemische können z.B. aus Chlorwasserstoff, Fluorwasserstoff, Ammoniak und Wasserdampf sowie einem zusätzlichen Trägergas (Luft, Stickstoff, Argon etc.) bestehen. Ebenso werden Analysegeräte zur Bestimmung des Feuchtegehalts in Prozeß- und Rauchgasen mit definierten Wasserdampf/Gas-Gemischen überprüft und kalibriert. Ein weiteres Anwendungsgebiet ist die Simulation von komplexen, mit Feuchte befadenen Gasatmosphären, wie sie bei der Werkstoffprüfung und Gassensor-Entwicklung benötigt und durch Verdampfung von wäßrigen Lösungen organischer und/oder anorganischer Komponenten erzeugt werden.

Für die automatische chemische Analyse von Flüssigkeiten wird häufig die zu untersuchende Flüssigkeit in die Dampfphase überführt und zur Analyse in einen geeigneten Analysator eingeleitet. Wenn die zu verdampfenden Flüssigkeiten aus mehreren Phasen bestehen, so ist das Sieden ein ungeeignetes Verfahren, da sich die einzelnen Phasen beim Sieden trennen. Aber auch mit einphasigen Flüssigkeiten hat man beim Sieden Probleme, eine definierte Zusammensetzung aus Dampf und Trägergas zu gewinnen, da die Menge der verdampften Flüssigkeit über die zugeführte Energie nur schwer zu kontrollieren ist. Entsprechend schwierig ist es, niedrige Nachweisgrenzen zu erreichen.

Deshalb werden vielfach Sättigungsverfahren eingesetzt, wobei ein Gasstrom durch die in die Dampfphase zu überführende Flüssigkeit perlt. Die tatsächliche Zusammensetzung des Gas/Dampf-Gemisches wird dabei durch verschiedene Parameter bestimmt, wie z.B. Temperatur, hydrostatischer Druck, Größe der Gasblasen und Gesamtdurchfluß, so daß die erzielbare Genauigkeit und Reproduzierbarkeit oft den gestellten Anforderungen nicht genügt.

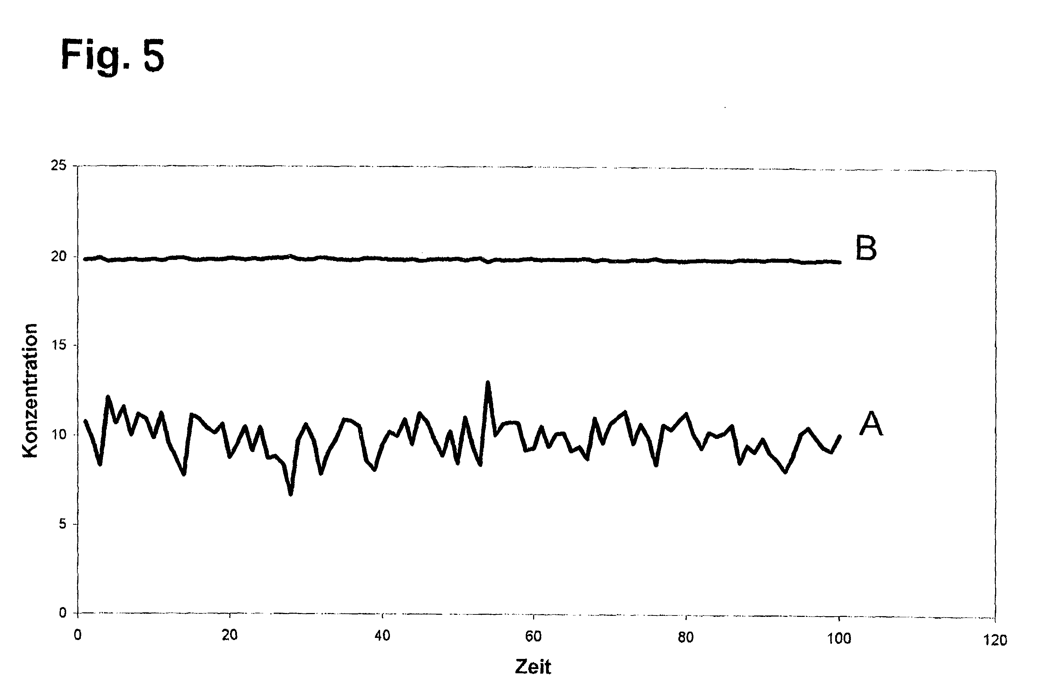

Um die Zusammensetzung des Gas/Dampf-Gemischs definieren zu können, ist in EP-B-0 411 500 vorgesehen, sowohl Trägergas als auch Flüssigkeit über geeignete kontinuierliche Dosiereinheiten (Massenflußregler, Dosierpumpen) einem Verdampfungsreaktor zuzuführen. Dabei erfährt das Gas/Dampf-Gemisch allerdings in seinem zeitlichen Verlauf Fluktuationen, wie beispielhaft in Fig. 5 dargestellt ist. Diese Schwankungen stören insbesondere bei der Kalibrierung von Analysegeräten, weil dadurch das Signal/Rauschverhältnis und damit die Nachweisgrenze verschlechtert werden. Aber auch für viele verfahrenstechnische Aufgabenstellungen, bei denen ein hochkonstantes Gas/Dampf-Gemisch erforderlich ist, wirken sich die Fluktuationen nachteilig aus. Sie beruhen nur zum kleineren Teil auf ungleichmäßiger Förderung einer Flüssigkeitsdosierpumpe, so daß der Einbau von Fluktuationsdämpfern nicht zur Lösung des Problems führt. Hauptursache von Pulsationen, Fluktuationen u.dgl. ist vielmehr eine diskontinuierliche Verdampfung, die schlagartig zu einem Volumenzuwachs in der Größenordnung eines Faktors 1000 führt.

Zur Abhilfe wurde in EP-B-0 411 500 eine dem Verdampfungsreaktor nachgeschaltete Überströmeinheit vorgeschlagen, um nur einen Teilstrom des erzeugten Gas/Dampf-Gemischs dem Gasanalysator zuzuführen und den anderen Teilstrom zur Dämpfung in eine Tauchung abzuleiten. Nachteilig sind allerdings zusätzlich anfallendes Abgas, da das Gas/Dampf-Gemisch immer im Überschuß produziert werden muß, ferner der relativ große Aufbau einer solchen Einheit sowie der apparative Aufwand und die immer noch unzureichende Unterdrückung der Fluktuation.

In US-A-5 361 800 wurde eine Verdampfervorrichtung vorgeschlagen, bei der die zu verdampfende Flüssigkeit zwischen sehr dünne, beheizte Scheibchen geführt wird. Dadurch soll das Verhältnis von Oberfläche zu Volumen der Flüssigkeit vergrößert und so die Wärmezufuhr verbessert werden. Ungünstig ist die hiermit zwangsläufig verbundene Vergrößerung der beheizten Oberfläche, an der eine stärkere chemische Wechselwirkung mit der Flüssigkeit erfolgt. Dies führt bei reaktiven Flüssigkeiten zum chemischen Angriff der beheizten Scheibchen, die aufgrund ihrer geringen Dicke schnell zerstört werden können, wobei auch noch das erzeugte Gas durch Korrosionsprodukte der Scheibchen verunreinigt wird.

Gemäß US-A-5 431 736 wird eine Flüssigkeit zunächst in einer ersten Kammer mit einem Trägergas gemischt und anschließend unter Druck durch eine Düse in eine zweite Verdampferkammer gepreßt. Die Trennung von Gemischbildung in der ersten Kammer und Verdampfung in der zweiten Kammer bewirkt, daß der Taupunkt in der ersten Kammer unterschritten werden kann. Auch hier ist es bei reaktiven Flüssigkeiten möglich, daß die erste Kammer chemisch angegriffen wird. Außerdem kann durch unvollständige thermische Entkopplung der beiden Kammern die Verdampfungstemperatur der Flüssigkeit in der ersten Kammer lokal überschritten werden, wodurch dort eine unkontrollierte, unvollständige Vorverdampfung auftritt, die zu Fluktuationen ähnlich dem Verlauf A in Fig. 5 führt.

Bei einem in US-A-5 372 754 offenbarten Verfahren werden die zu verdampfende Flüssigkeit und ein Trägergas separat über je einen Massenflußregter einer Zerstäuberdüse zugeführt. Letztere mündet in einer in einem zylindrischen Behälter ausgebildeten, außenbeheizten Kammer, von der aus das erzeugte Gas/Dampf-Gemisch einem nachfolgenden Prozeß zugeführt wird. Die Zerstäuberdüse besitzt eine innere Kapillare, für die Zuführung der Flüssigkeit, sowie eine konzentrische äußere Düse, durch die das Trägergas in die Kammer strömt. Die Flüssigkeit wird mitgerissen und innerhalb der Kammer entsteht ein Gas/Flüssigkeits-Nebel, der anschließend aufgrund der in der Kammer vorherrschenden Temperatur verdampft. Problematisch hierbei ist, daß das Zerstäuben weitgehend unkontrolliert erfolgt, d.h. es bilden sich auch hier Flüssigkeitströpfchen unterschiedlichster Größe. Letztere können auf ihrem Weg zu den Kammerbegrenzungen nicht vollständig verdampfen, was zu lokalen Abkühlungen der Kammeroberfläche führt. Die Verdampfung erfolgt diskontinuierlich. Fluktuationen können mithin nicht wirksam vermieden werden.

Gleiche Schwierigkeiten ergeben sich mit einem aus DE-OS-21 51 007 bekannten Verfahren zur Herstellung eines Dampf-Gas-Gemischs. Eine zu verdampfende Flüssigkeit wird über eine Kapillare in eine geheizte Kammer gespritzt und durch Auftreffen auf deren Wandungen verdampft. Erst danach wird das Trägergas eingeleitet, damit sich dieses mit dem Dampf vermischt. Die erzielbare Genauigkeit und Reproduzierbarkeit der Gas-Dampf-Zusammensetzung ist völlig unzureichend.

Aufgabe der Erfindung ist es, diese und weitere Nachteile des Standes der Technik mit einfachen Mitteln zu überwinden und eine verbesserte Vorrichtung zu schaffen, mit der das Verdampfen von Flüssigkeit und das Herstellen von Gas/Dampf-Gemischen definierter Zusammensetzung zuverlässig bewirkt werden kann. Ein weiteres Ziel der Erfindung besteht darin, gewünschte Gas/Dampf-Gemische rasch und mit sparsamem Energieaufwand zu erzeugen. Die Vorrichtung soll ferner besonders gleichmäßige und feine Verteilungen von Gemischkomponenten auch im Bereich sehr geringer Konzentrationen ermöglichen.

Hauptmerkmale der Erfindung sind in Anspruch 1 angegeben. Ausgestaltungen bilden den Gegenstand der Ansprüche 2 bis 21. Eine spezielle Verwendung der erfindungsgemäßen Vorrichtung ist in Anspruch 22 angegeben.

Bei einer Vorrichtung zum Verdampfen von Flüssigkeit und zum Herstellen von Gas/Dampf-Gemischen definierter Zusammensetzung in einem Behälter mit einer Kammer, in die eine Düse zur dosierten Zufuhr von Flüssigkeit mündet, mit einer Trägergas-Zuführung, die das Hinzumischen eines Trägergases ermöglicht, sowie mit einem Auslaß, aus der das erzeugte Gas/Dampf-Gemisch abführbar ist, wobei die einen Zerstäuberraum bildende Kammer eine temperaturgesteuerte Außenbeheizung sowie einen Feinzerstäuber aufweist, dem Flüssigkeit und Trägergas getrennt zuführbar sind, sieht die Erfindung laut Anspruch 1 vor, daß der Abstand zwischen dem in den Zerstäuberraum ragenden Feinzerstäuber und seinen beheizten Begrenzungsflächen in Zerstäubungsrichtung verstellbar ist.

Dank dieser übersichtlichen Konstruktion, die ebenso einfach wie wirtschaftlich herstellbar ist, erreicht man, daß der Zerstäubungspunkt stets hinreichend weit von den in Zerstäubungsrichtung liegenden Kammerbegrenzungen entfernt ist, so daß an diesen ein unmittelbarer Kontakt mit den Flüssigkeitströpfchen unterbunden wird. Dort kommt vielmehr bereits Dampf bzw. ein Dampf/Gas-Gemisch an, wobei die Außenbeheizung eine Kondensation zuverlässig verhindert.

Hinzu kommt, daß die Flüssigkeit und das Trägergas dem Zerstäuberraum getrennt zuführbar sind, wo die Zuströme am bzw. im Feinzerstäuber vereinigt und vermischt werden. Die Feinverteilung läßt sich mithin durch Zerstäubung und Verdampfung besonders gut steuern. Dazu trägt auch die temperaturgesteuerte Außenbeheizung wesentlich bei, noch mehr aber der in Zerstäubungsrichtung verstellbare Feinzerstäuber, mit dem für die Flüssigkeitskomponente ein überaus günstiges Verhältnis Oberfläche zu Volumen erzielbar ist. Gegenüber herkömmlichen Anordnungen ist dieses Verhältnis um einen Faktor von ca. 1000 vergrößert. Infolgedessen kann die beheizte Oberfläche klein gehalten werden. Die Flüssigkeit wird in sehr feine Tröpfchen zerstäubt, deren mittlerer Durchmesser beispielsweise 100 µm oder weniger beträgt und die anschließend schnell verdampfen. Von besonderem Vorteil ist es dabei, daß man der Flüssigkeit vor der Zerstäubung weniger Wärme als zur Verdampfung notwendig zuführen kann, ohne die Gleichmäßigkeit der Gemisch-Erzeugung zu beeinträchtigen.

Gemäß Anspruch 2 ist in dem Feinzerstäuber die Trägergas-Zuführung mit der Düse baulich vereinigt, wobei letztere eine Kapillare aufweist, die von einer mit einem Trägergas-Zuführkanal strömungsverbundenen Buchse konzentrisch umgeben ist, und wobei die Buchse und die Kapillare einen zum Kammer-Inneren hin gerichteten Ringspalt begrenzen, dessen Weite einstellbar veränderlich ist. Dies ermöglicht zunächst einen platzsparenden Aufbau und geht insofern über die üblichen Zweistoffdüsen hinaus, als diese einen wesentlich größeren Volumendurchsatz an Flüssigkeit und Trägergas benötigen. Die Erfindung befaßt sich jedoch mit Anwendungen, bei denen Trägergas-Ströme bevorzugt im Bereich zwischen 100 l/h bis 1000 l/h und Flüssigkeits-Ströme von ca. 10 ml/h bis 300 ml/h bei Temperaturen bis zu 250 °C benutzt werden. Darüber hinaus läßt sich durch die veränderliche Weite des Ringspalts zusammen mit dem Innendurchmesser der Kapillare eine stets optimale Zerstäubung mit planmäßig vorgebbarer mittlerer Tröpfchengröße erzielen.

Zur Einstellung der Spaltweite können Buchse und Kapillare laut Anspruch 3 relativ zueinander axialversetzbar sein, besonders nach Art von Anspruch 4, wonach die Buchse in einer Bohrung des Behälterbodens verschieblich und die Kapillare im Boden ortsfest angeordnet ist.

Vorteilhaft ist es, wenn die Buchse gemäß Anspruch 5 einen Flanschkragen mit sich verjüngendem Innendurchmesser aufweist, der an der engsten Stelle den Außendurchmesser der Kapillare noch überschreitet. Durch feinmechanische Präzisionsfertigung läßt sich so eine minimale Ringspaltweite exakt herstellen, ja bei Bedarf sogar ein beinahe dichter Verschluß.

Günstige Ergebnisse erhält man ferner durch die Gestaltung von Anspruch 6, wonach die Geometrie des kammerseitigen Endes der Kapillare und/oder des Ringspalts einen Sprühwinkel für die Flüssigkeits-Zufuhr definiert. Man hat also eine gerichtete Zerstäubung, insbesondere zu den beheizten Kammer-Wandungen hin, wodurch eine stetige Verdampfung gewährleistet ist.

Für die Feinzerstäubung ist es günstig, wenn nach Anspruch 7 die Kapillare einen Innendurchmesser von höchstens 250 µm hat, wobei der Außendurchmesser der Kapillare laut Anspruch 8 zweckmäßig wenigstens das Fünffache ihres Innendurchmessers beträgt. Dank solcher Bemessung wird die Flüssigkeit im Zerstäuber auf ähnlich hohe Geschwindigkeiten beschleunigt, wie sie das Trägergas im Ringspalt hat. Dadurch werden sehr kleine Flüssigkeitströpfchen erzielt, die verdampfen können, bevor sie die Kammer-Wandungen erreichen.

Eine weitere Ausführungsform der Erfindung sieht vor, daß gemäß Anspruch 9 vor, daß innerhalb der Kammer Temperatursensoren und/oder Drucksensoren angeordnet sind, die in Einklang mit Anspruch 10 auf den Kammerbegrenzungen aufgebracht oder angebracht oder darin integriert sein können. Mit Hilfe dieser Sensoren läßt sich eine optimale Anpassung des Feinzerstäubers an die zu verdampfende Flüssigkeitsmenge und die zur Verfügung stehende Trägergasmenge erzielen. Insbesondere dann, wenn nach Anspruch 11 die Weite des Ringspalts in Abhängigkeit von dem oder den Ausgangssignalen der Temperatursensoren und/oder der Drucksensoren einstellbar ist. Dies kann, wie Anspruch 12 vorsieht auch automatisch erfolgen, wenn nämlich die Temperatursensoren und/oder die Drucksensoren in einem Regelkreis integriert sind, mit dessen Regelsignal die Weiten-Einstellung des Ringspalts vorgenommen werden kann.

Bevorzugt sind der Auslaß und der Feinzerstäuber laut Anspruch 13 im Behälter zentrisch angeordnet, wobei der Auslaß nach Anspruch 14 gegenüber dem Feinzerstäuber im Deckel des Behälters angeordnet sein kann. Für besondere Zwecke sieht die Erfindung aber auch die Anordnung von Anspruch 15 vor, wobei der Auslaß sich neben dem Feinzerstäuber im Boden des Behälters befindet. Dabei kann laut Anspruch 16 der Auslaß auf gleicher Höhe mit dem Kanal diesem entgegengerichtet verlaufen, was große konstruktive Vorteile hat. Speziell mit dieser Bauform ist es nämlich möglich, im Einklang mit Anspruch 17 zwei gleichartige Behälter derart baulich zu vereinigen, daß der einer ersten Kammer zugeordnete Auslaß mit dem einer zweiten Kammer zugeordneten Einlaßkanal fluchtet. Hierzu sieht Anspruch 18 eine Kaskaden-Anordnung vor, bei der zwei oder mehr Behälter miteinander seitlich jeweils überkopf verbunden sind, so daß der Auslaß des jeweils vorgängigen Behälters mit dem Einlaß des jeweils nachgeordneten Behälters unmittelbar und formschlüssig dicht verbunden ist.

Man erkennt, daß eine solche Vorrichtung sich außerordentlich raumsparend und stabil ausführen läßt. Dies ist ein beachtlicher Fortschritt etwa gegenüber DE-C-899 346, wonach Gas in mehreren Stufen fortschreitend höher erhitzt und hinter den einzelnen Stufen mit je einer Teilmenge der Flüssigkeit vermischt wird. Die Teilmenge soll bis zur nächsten Temperaturstufe verdampft sein, was nicht leicht einzuhalten ist. Der herkömmlich notwendige technische Aufwand für diese Kaskadenanordnung ist hoch.

Nach Anspruch 19 können in der Kammer mehrere, jeweils mit einem Flüssigkeitsdosierer verbundene Düsen bzw. Kapillaren vorhanden sein, was den Zerstäubungs-Effekt entsprechend intensiviert. Anspruch 20 sieht vor, daß die Düsen bzw. Kapillaren mit unterschiedlichen Flüssigkeitsdosierern verbunden sind, z.B. mit üblichen Dosierpumpen, so daß verschiedene Flüssigkeits-Komponenten dem Trägergas gleichzeitig zur Zerstäubung zugeführt werden können. Indem der Flüssigkeitsdurchsatz zudem in jedem Dosierer einzeln regel- bzw. steuerbar ist, kann man die Einspeisung mit großer Genauigkeit und reproduzierbar so durchführen, wie es die jeweilige Mischaufgabe erfordert.

Besonders zweckmäßig ist die Ausbildung laut Anspruch 21. Danach ist der Abstand des Feinzerstäubers von den Begrenzungsflächen des Behälters derart verstellbar, daß die mittlere Flüssigkeitströpfchengröße von einem Anfangswert am Austritt des Feinzerstäubers bis zu den Begrenzungsflächen des beheizten Bereichs auf weniger als ein Zehntel des Anfangswerts zurückgeht. Hierdurch erzielt man mit sehr wirtschaftlichen Mitteln eine definierte Feinzerstäubung und verhindert das herkömmlich unausbleibliche schlagartige Verdampfen größerer Tröpfchen beim Auftreffen auf die Kammerbegrenzungen. Vielmehr verdampfen die Zerstäubungströpfchen unterwegs in solchem Maße, daß allenfalls sehr kleine Resttröpfchen die Kammerwandungen erreichen, wodurch die Fluktuation bis unter die Nachweisgrenze absinkt.

Wichtig ist die in Anspruch 22 vorgesehene Verwendung der Vorrichtung zum Erzeugen von definierten Quecksilberchlorid-Gas/Dampf-Gemischen unter Verdampfung wässriger Quecksilber(II)chlorid-Lösungen, insbesondere mit Konzentrationen der Größenordnung µg/m³. Die so erzeugten Gemische können für die Beaufschlagung und Kalibrierung von Analysegeräten zur Bestimmung von gasförmigem Quecksilberchlorid eingesetzt werden. Das Gemisch wird mit Hilfe der erfindungsgemäßen Vorrichtung hochgenau mit geringem Aufwand durch Verdampfung einer niedrigkonzentrierten Flüssigkeitsvorlage gewonnen.

Weitere Merkmale, Vorteile und Einzelheiten der Erfindung ergeben sich aus dem Wortlaut der Ansprüche sowie aus der folgenden Beschreibung von Ausführungsbeispielen anhand der Zeichnung. Darin zeigen:
- Fig. 1: eine stark vergrößerte Axialschnittansicht eines Behälters einer erfindungsgemäßen Vorrichtung,
- Fig. 2: eine ähnliche Axialschnittansicht eines anderen Behälters,
- Fig. 3: eine Axialschnittansicht einer weiteren Ausführungsform eines Behälters,
- Fig. 4: eine weniger vergrößerte Schnittansicht zweier zusammengebauter Behälter und
- Fig. 5: ein Fluktuationsdiagramm.

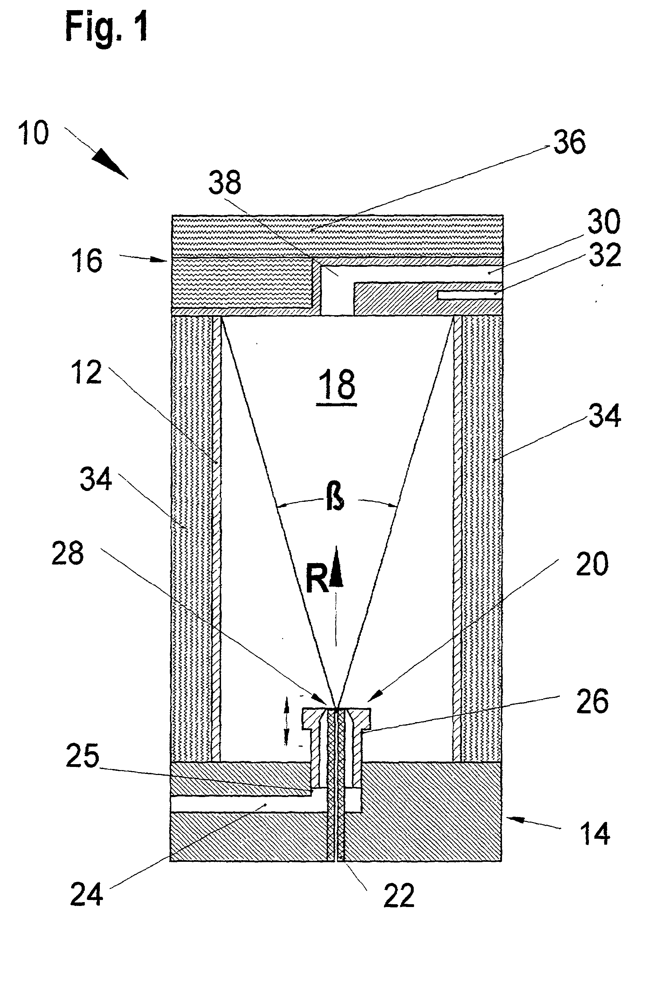

In Fig. 1 ist ein Behälter 10 mit einer Verdampferkammer 18 mit einer Zerstäubungseinrichtung 20 dargestellt. Der Behälter 10 hat einen z.B. zylindrischen oder quaderförmigen Korpus 12 mit formgleichem Boden 14 und Deckel 16. Diese Elemente begrenzen die Kammer 18.

Der Feinzerstäuber 20 sitzt insbesondere zentrisch im Boden 14, wo eine Kapillare 22 fest angebracht ist. Über sie wird zu verdampfende Flüssigkeit zugeführt. Ein Kanal 24 dient zur Zufuhr von Trägergas.

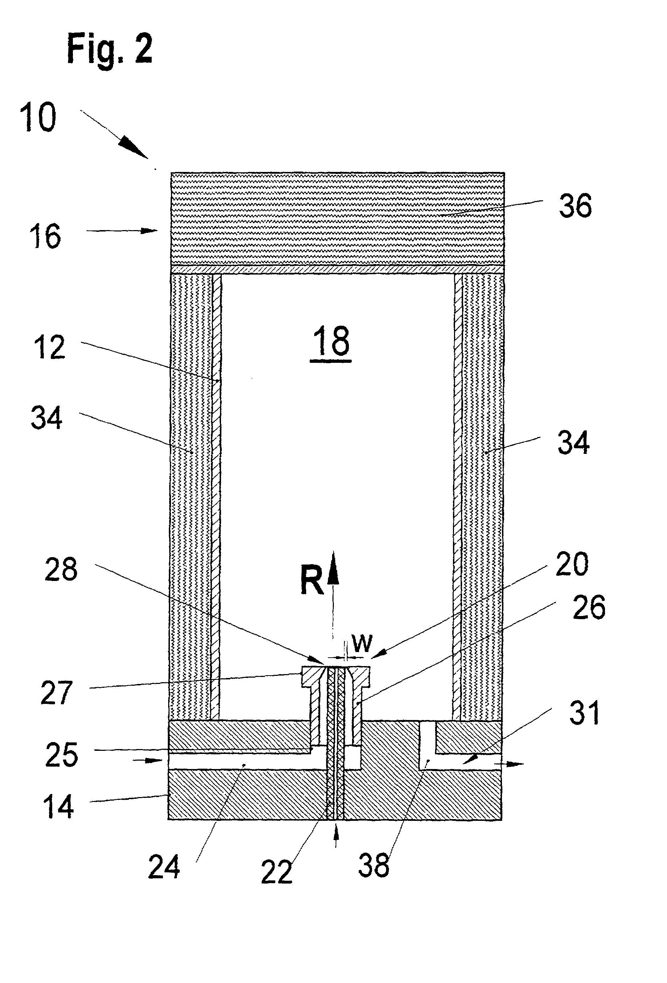

Zwischen der Kapillare 22 und einer Buchse bzw. Hülse 26 ist ein Ringspalt 28 gebildet, dessen Dimensionen, namentlich Spaltweite w (Fig. 2), über die in einer Bohrung 25 axial bewegliche Hülse 26 und mittels der Kapillare 22 vorgegeben werden können. Hülse 26 und Kapillare 22 sind aus einem korrosionsfesten Werkstoff mit niedriger Wärmeleitzahl gefertigt, z.B. aus Aluminiumoxid, Siliziumnitrid, Polytetrafluorethylen (PTFE), Polyaryletheretherketon (PEEK) o.dgl.

Der Innendurchmesser der Kapillare 22 wird als entscheidender Parameter für die bei der Zerstäubung erreichbare mittlere Tröpfchengröße festgelegt. Er kann in Anpassung an die Viskosität der zu verdampfenden Flüssigkeit gewählt werden; bevorzugt wird ein Maximal-Innendurchmesser von 250 *µ*m. Der Außendurchmesser der Kapillare 22 sollte mindestens das Fünffache des Innendurchmessers betragen.

Die Geometrie des kammerseitigen Endes der Kapillare 22 und/oder des Ringspaltes 28 bestimmt einen Sprühwinkel β, der an die Geometrie des Verdampfers angepaßt werden kann. Der Sprühwinkel β wird so gewählt (Fig. 1), daß die Trajektorien der Tröpfchen in möglichst großem Abstand vom Zerstäuber 20 auf der Oberfläche des Verdampfers auftreffen, d.h. auf der inneren Wandung des Korpus 12 und des Deckels 16 der Kammer 18. Auch die Formgebung eines Flanschkragens 27 der Buchse 26 kann den Sprühwinkel β beeinflussen, der allgemein mehr als 20° betragen sollte.

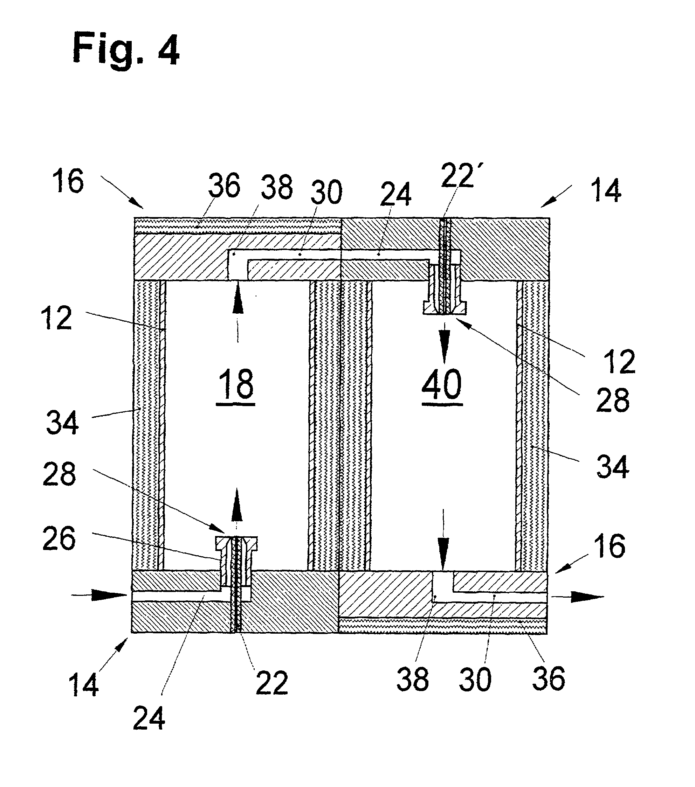

Die Verdampferflächen sind durch Heizelemente 34,36 beheizt. Ein Temperaturfühler 32 ist im Bereich des Auslasses 30 angebracht. Die Temperatur des Gas/Dampf-Gemisches wird über einen Regelkreis mit dem Fühler 32, den elektrischen Heizelementen 34, 36 und einem Temperaturregler konstantgehalten. Das Gas/Dampf-Gemisch wird über den Auslaß 30 abgeleitet und entweder dem jeweiligen Verbraucher oder wenigstens einer weiteren Verdampferkammer 40 zugeführt (Fig. 4). Zur Erhöhung der Turbulenz ist bei einer abgewandelten Ausführungsform der Auslaß 31 für das Gas/Dampf-Gemisch in den Bereich neben dem Gaseingang verlegt (Fig. 2).

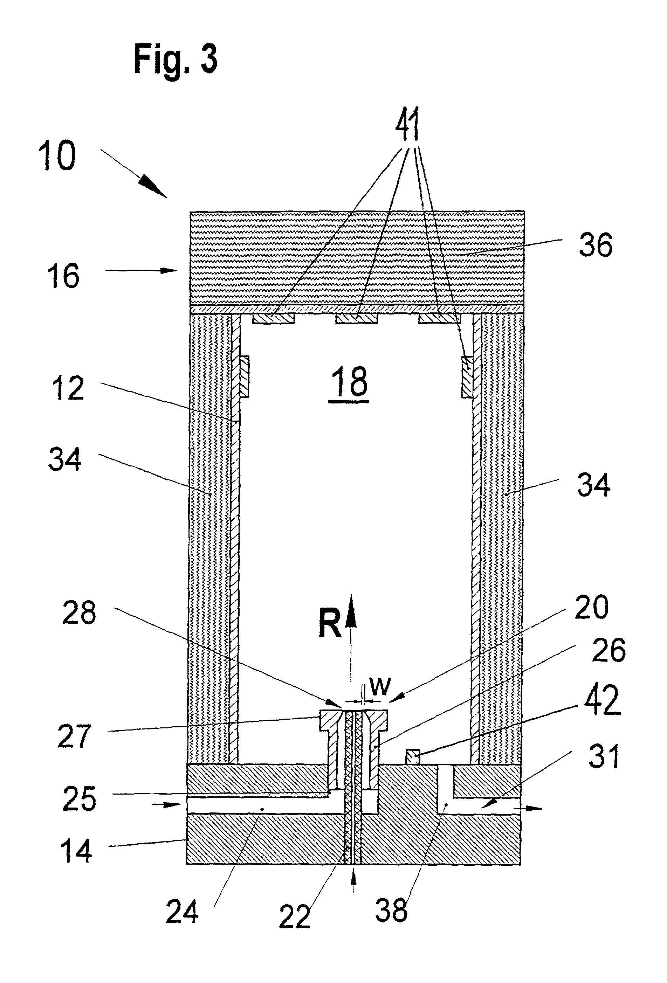

Um eine optimale Anpassung des Feinzerstäubers an die zu verdampfende Flüssigkeitsmenge und die zur Verfügung stehende Trägergasmenge zu erzielen, sieht eine weitere, in Fig. 3 dargestellte Ausführungsform der Erfindung vor, daß innerhalb der Kammer (18) Temperatursensoren (41) oder Drucksensoren (42) angeordnet sind. Bei nicht optimaler Einstellung des Feinzerstäubers, insbesondere der Hülse (26) gegenüber der Kapillare (22), können Flüssigkeitströpfchen entstehen, die aufgrund Ihrer Größe nicht vollständig auf dem Weg zu den Kammerbegrenzungen (12, 16) verdampfen. Treffen diese Tröpfchen auf der Kammerbegrenzung (12, 16) auf, so führt dies zunächst zu einer lokalen Abkühlung der Oberfläche. Aufgrund des an dieser Stelle erhöhten Temperaturgradienten zwischen Heizmantel (34, 36) und Kammerbegrenzung (12, 16), erhöht sich der Wärmestrom von Heizmantel (34, 36) zu Kammerbegrenzung (12, 16), was wiederum zu einer lokalen Temperaturerhöhung führen kann. Das heißt auf der Oberfläche der Kammerbegrenzung (12, 16) treten punktuelle Temperaturfluktuationen auf, die auf eine nicht optimierte Einstellung des Feinzerstäubers (20) hinweisen. Durch Anbringen von einem oder mehreren Temperatursensoren (41) auf oder in der Kammerbegrenzung (12, 16), lassen sich diese Temperaturfluktuationen detektieren. Dabei kann der bzw. die Temperatursensoren (41) entweder großflächig ausgebildet sein und ein Sammelsignal liefern, oder in mehrere kleinflächige Einzelsensoren unterteilt sein. Das Temperatursignal der Sensoren (41) wird derart ausgewertet, daß man die zeitabhängige Temperaturfluktuation zunächst auf einem Bildschirm, einem Oszillographen o.dgl. sichtbar macht und anschließend die Amplitude der Fluktuation durch Verändern der Stellung der Hülse (26) gegenüber der Kapillaren (22) auf ein Minimum verringert. Dieser Abstimmvorgang kann manuell erfolgen oder durch einen entsprechenden Regelkreis automatisiert werden. In letzterem Fall dient das zeitabhängige Temperatursignal der Sensoren (41) als Eingangsgröße für einen geeigneten (nicht gezeigten) Regler. Über ein geeignetes (ebenfalls nicht dargestelltes) Stellglied wird die Position der Hülse (26) verändert.

Alternativ zu einer zeit- und ortsabhängigen Temperaturmessung, wie oben beschrieben, kann eine Druckmessung in der Kammer (18) mit einem Drucksensor (42) erfolgen. Dabei werden Druckschwankungen detektiert, die durch plötzliches Verdampfen von Tröpfchen entstehen, die auf die Kammerbegrenzung (12, 14, 16) treffen. Dabei entsteht ein kurzzeitiger Gasvolumenzuwachs, der durch den Strömungswiderstand im Auslaß (31) zu einer kurzzeitigen Druckerhöhung innerhalb der Kammer (18) führt. Der Strömungswiderstand im Auslaß (31) ist ggf. zur Steigerung des Meßeffekts des Drucksensors zu erhöhen. Wie im Falle der Temperaturmessung, wird das zeitabhängige Drucksignal zur Optimierung der Feinzerstäubereinstellung dergestalt genutzt, daß die Druckamplitude minimiert wird.

In Fig. 4 sind beispielhaft zwei hintereinandergeschaltete Behälter 10 mit Verdampferkammern 18, 40 dargestellt. Es können auch mehr als zwei Kammern kaskadenartig einander nachgeordnet werden. Solche Anordnungen dienen der Erzeugung besonders hochbeladener Gas/Dampf-Gemische. Insbesondere wenn der Dampfgehalt mindestens 60 Vol.-% betragen soll, sind solche mehrstufigen Vorrichtungen von großem Vorteil.

Gemäß Fig. 4 wird das über einen Kanal 24 zuströmende Gas/Dampf-Gemisch zur Feinzerstäubung einer durch eine Kapillare 22 zugeführten Flüssigkeit verwendet. Dadurch wird ohne zusätzliches Trägergas die weitere Zerstäubung von Flüssigkeit ermöglicht. Schließt man die Kapillaren 22 und 22' an dieselbe Flüssigkeits-Dosiereinrichtung an, so stellen die beiden Kapillaren Strömungswiderstände dar. Zweckmäßig werden deren Durchmesser und Länge unterschiedlich und so gewählt, daß vom gesamten Flüssigkeitsstrom nur der kleinere Teil über die Kapillare 22' fließt, der mit Hilfe des Trägergasstroms zerstäubbar ist. Der größere Teil des Flüssigkeitsstroms fließt hingegen über die Kapillare 22, da in der zweiten Kammer 40 das gesamte Gas/Dampf-Gemisch aus der ersten Kammer 18 für die Zerstäubung zur Verfügung steht.

Durch weitere Hintereinanderschaltung von Verdampferkammern, die jeweils formschlüssig und überkopf miteinander dicht verbindbar sind, kann so eine sukzessive Aufkonzentration des Gas/Dampf-Gemisches erreicht werden.

Indem man die einzelnen Kapillaren 22 an separate Flüssigkeitsdosierer anschließt, können unterschiedliche Lösungen getrennt dosiert werden. Dies ist vorteilhaft, um Reaktionen in der flüssigen Phase zu verhindern, die vielmehr in der Gasphase stattfinden sollen.

Beispielhaft sei die Erzeugung eines Quecksilberdampf-Gemisches genannt. Dazu werden dem Verdampfer erfindungsgemäß über zwei (nicht dargestellte) separate Dosierpumpen getrennt zwei Lösungen zugeführt, nämlich erstens eine Lösung mit einer Quecksilberverbindung wie z.B. Quecksilber(II)chlorid und zweitens eine Lösung eines geeigneten Reduktionsmittels. Unmittelbar vor der Flüssigkeits-Zerstäubung werden diese beiden Lösungen in einer Mischkammer zusammengeführt, die an den Kanal 24 anschließt oder von bzw. mit ihm gebildet wird.

Mit herkömmlichen Verfahren und Vorrichtungen treten Fluktuationen von Gas/Dampf-Gemischen auf, wie sie im Diagramm der Fig. 5 als Verlauf A der Konzentration in Abhängigkeit von der Zeit - mit willkürlichen Einheiten - beispielhaft dargestellt sind. Man erkennt eine beträchtliche Unruhe mit Schwankungen, die häufig keine exakte Kalibrierung eines Analysegeräts zulassen. Dagegen zeigt Kurve B einen glatten Verlauf, wie er mit der erfindungsgemäßen Vorrichtung ohne weiteres erzielbar ist. Vielfach ist hierbei keine Unterscheidung vom intrinsischen Rauschen eines nachgeschalteten Gasanalysators mehr möglich.

Die Erfindung ist nicht auf die vorbeschriebenen Ausführungen beschränkt, da zahlreiche Abwandlungen möglich sind. Man erkennt aber, daß in bevorzugter Ausgestaltung zum Verdampfen von Flüssigkeit und zum Herstellen von Gas/Dampf-Gemischen definierter Zusammensetzung ein Behälter 10 mit einer Kammer 18 vorhanden ist, die eine temperaturgesteuerte Außenbeheizung 24, 26 und einen Feinzerstäuber 20 mit Trägergas-Zuführung 24 und Düse in Form einer Kapillare 22 aufweist. Diese sitzt konzentrisch in einer mit dem Zuführkanal 24 strömungsverbundenen Buchse 26 und begrenzt in ihr einen Ringspalt 28 von einstellbarer Weite w und definiertem Sprühwinkel. Der Außendurchmesser der Kapillare ist wenigstens 5x so groß wie ihr Innendurchmesser von max. 250 *µ*m. Der Auslaß 30 sitzt entweder im Deckel 16 gegenüber dem Feinzerstäuber 20 oder neben diesem im Boden 14 des Behälters 10, dann dem Kanal 24 entgegengerichtet. Zwei oder mehr gleichartige Behälter 10 sind seitlich z.B. überkopf so verbindbar, daß zwischenliegende Aus- und Einlässe 30; 24 dicht aneinander anschließen. Mehrere Kapillaren 22 können mit wenigstens einem Flüssigkeitsdosierer verbunden sein. Eine bevorzugte Verwendung ist das Erzeugen von definierten Quecksilberchlorid-Gas/Dampf-Gemischen unter Verdampfung wäßriger Quecksilber(II)chlorid-Lösungen, insbesondere mit Konzentrationen der Größenordnung *µ*g/m³.

### Bezugszeichenliste

- A: herkömmlicher Kurvenverlauf
- B: erfindungsgemäßer Verlauf
- β: Sprühwinkel
- R: Zerstäuberrichtung
- w: Spaltweite

- 10: Behälter
- 12: Korpus
- 14: Boden
- 16: Deckel
- 18: Kammer
- 20: Zerstäuber
- 22, 22': Kapillare
- 24: (Einlaß-)Kanal
- 25: Bohrung
- 26: Buchse/Hülse
- 27: Flanschkragen
- 28: Ringspalt
- 30: Auslaß
- 31: Auslaß
- 32: Temperaturfühler
- 34: Heizmantel
- 36: Deckelheizung
- 38: Knie/Winkel
- 40: zweite Kammer

## Patentansprüche

1. Vorrichtung zum Verdampfen von Flüssigkeit und zum Herstellen von Gas/Dampf-Gemischen definierter Zusammensetzung in einem Behälter (10) mit einer Kammer (18), in die eine Düse zur dosierten Zufuhr von Flüssigkeit mündet, mit einer Trägergas-Zuführung (24), die das Hinzumischen eines Trägergases ermöglicht, sowie mit einem Auslaß (30), aus der das erzeugte Gas/Dampf-Gemisch abführbar ist, wobei die einen Zerstäuberraum bildende Kammer (18) eine temperaturgesteuerte Außenbeheizung (34, 36) sowie einen Feinzerstäuber (20) aufweist, dem Flüssigkeit und Trägergas getrennt zuführbar sind, **dadurch gekennzeichnet, daß** der Abstand zwischen dem in den Zerstäuberraum (18) ragenden Feinzerstäuber (20) und seinen beheizten Begrenzungsflächen (12, 16) in Zerstäubungsrichtung (R) verstellbar ist.

2. Vorrichtung nach Anspruch 1, **dadurch gekennzeichnet, daß** in dem Feinzerstäuber (20) die Trägergas-Zuführung (24, 26) mit der Düse baulich vereinigt ist, wobei letztere eine Kapillare (22) aufweist, die von einer mit einem Trägergas-Zuführkanal (24) strömungsverbundenen Buchse (26) konzentrisch umgeben ist, und wobei die Buchse (26) und die Kapillare (22) einen zum Kammer-Inneren hin gerichteten Ringspalt (28) begrenzen, dessen Weite (w) einstellbar veränderlich ist.

3. Vorrichtung nach Anspruch 2, **dadurch gekennzeichnet, daß** Buchse (26) und Kapillare (22) relativ zueinander axialversetzbar sind.

4. Vorrichtung nach Anspruch 3, **dadurch gekennzeichnet, daß** die Buchse (26) in einer Bohrung (25) des Behälterbodens (14) verschieblich und die Kapillare (22) im Boden (14) ortsfest angeordnet ist.

5. Vorrichtung nach Anspruch 2 oder 3, **dadurch gekennzeichnet, daß** die Buchse (26) einen Flanschkragen (27) mit sich verjüngendem Innendurchmesser aufweist, der an der engsten Stelle den Außendurchmesser der Kapillare (22) noch überschreitet.

6. Vorrichtung nach einem der Ansprüche 2 bis 5, **dadurch gekennzeichnet, daß** die Geometrie des kammerseitigen Endes der Kapillare (22) und/oder des Ringspalts (28) einen Sprühwinkel (β) für die Flüssigkeits-Zufuhr definiert.

7. Vorrichtung nach einem der Ansprüche 2 bis 6, **dadurch gekennzeichnet, daß** die Kapillare (22) einen Innendurchmesser von höchstens 250 µm hat.

8. Vorrichtung nach einem der Ansprüche 2 bis 7, **dadurch gekennzeichnet, daß** der Außendurchmesser der Kapillare (22) wenigstens das Fünffache ihres Innendurchmessers beträgt.

9. Vorrichtung nach einem der Ansprüche 1 bis 8, **dadurch gekennzeichnet, daß** innerhalb der Kammer (18) Temperatursensoren (41) und/oder Drucksensoren (42) angeordnet sind.

10. Vorrichtung nach Anspruch 9, **dadurch gekennzeichnet, daß** die Temperatursensoren (41) und/oder Drucksensoren (42) auf den Kammerbegrenzungen (12, 14, 16) aufgebracht, angebracht oder darin integriert sind.

11. Vorrichtung nach Anspruch 9 oder 10, **dadurch gekennzeichnet, daß** die Weite (w) des Ringspalts (28) in Abhängigkeit von dem oder den Ausgangssignalen der Temperatursensoren (41) und/oder der Drucksensoren (42) einstellbar ist.

12. Vorrichtung nach einem der Ansprüche 9 bis 11, **dadurch gekennzeichnet, daß** die Temperatursensoren (41) und/oder die Drucksensoren (42) in einem Regelkreis integriert sind, mit dessen Regelsignal die Weiten-Einstellung des Ringspalts (28) automatisiert durchführbar ist.

13. Vorrichtung nach einem der Ansprüche 1 bis 12, **dadurch gekennzeichnet, daß** der Auslaß (30) und der Feinzerstäuber (20) im Behälter (10) zentrisch angeordnet sind.

14. Vorrichtung nach einem der Ansprüche 1 bis 13, **dadurch gekennzeichnet, daß** der Auslaß (30) gegenüber dem Feinzerstäuber (20) im Deckel (16) des Behälters (10) angeordnet ist.

15. Vorrichtung nach einem der Ansprüche 1 bis 14, **dadurch gekennzeichnet, daß** der Auslaß (30) sich neben dem Feinzerstäuber (20) im Boden (14) des Behälters (10) befindet.

16. Vorrichtung nach Anspruch 15, **dadurch gekennzeichnet, daß** der Auslaß (30) auf gleicher Höhe mit dem Kanal (24) diesem entgegengerichtet verläuft.

17. Vorrichtung nach einem der Ansprüche 1 bis 16, **gekennzeichnet durch** bauliche Vereinigung zweier gleichartiger Behälter (10) derart, daß der einer ersten Kammer (18) zugeordnete Auslaß (30) mit dem einer zweiten Kammer (40) zugeordneten Einlaßkanal (24) fluchtet.

18. Vorrichtung nach Anspruch 17, **dadurch gekennzeichnet, daß** zwei oder mehr Behälter (10) miteinander seitlich jeweils überkopf verbunden sind, so daß der Auslaß (30) des jeweils vorgängigen Behälters mit dem Einlaß (24) des jeweils nachgeordneten Behälters unmittelbar und formschlüssig dicht verbunden ist.

19. Vorrichtung nach einem der Ansprüche 1 bis 18, **dadurch gekennzeich**net, daß in der Kammer (18; 40) mehrere, jeweils mit einem Flüssigkeitsdosierer verbundene Düsen bzw. Kapillaren (22) vorhanden sind.

20. Vorrichtung nach Anspruch 19, **dadurch gekennzeichnet, daß** die Düsen bzw. Kapillaren (22) mit unterschiedlichen Flüssigkeitsdosierem verbunden sind, wobei der Flüssigkeitsdurchsatz in jedem Dosierer einzeln Regel- bzw. steuerbar ist.

21. Vorrichtung nach einem der Ansprüche 1 bis 20, **dadurch gekennzeichnet, daß** der Abstand des Feiznerstäubers (20) von den Begrenzungsflächen (12, 16) des Behälters (10) so verstellbar ist, daß die mittlere Flüssigkeitströpfchengröße von einem Anfangswert am Austritt des Feinzerstäubers (20) bis zu den Begrenzungsflächen (12, 16) des beheizten Bereichs (18) auf weniger als ein Zehntel des Anfangswerts zurückgeht.

22. Verwendung der Vorrichtung nach einem der Ansprüche 1 bis 21 zum Erzeugen von definierten Quecksilberchlorid-Gas/Dampf-Gemischen unter Verdampfung wäßriger Quecksilber(II)chlorid-Lösungen, insbesondere mit Konzentrationen der Größenordnung µg/m³.

## Claims

1. Device for vaporizing liquid feed and for obtaining gas/vapour mixtures of a defined composition in a recipient (10) having a chamber (18) into which a nozzle for dosed feeding of liquid opens, comprising a carrier gas inlet (24) for admixing a carrier gas and comprising an outlet (30) for discharging the gas/vapour mixture produced, the chamber (18) which forms a spray compartment being provided with a temperature-controlled external heating (34, 36) as well as with an atomizer (20) to which liquid and carrier gas may be fed separately, **wherein** the distance between the atomizer (20), which protrudes into the spray compartment (18), and its heated boundary surfaces (12, 16) is adjustable in the atomizing direction (R).

2. Device according to claim 1, **wherein** the carrier gas inlet (24, 26) in the atomizer and the nozzle form an integral structure, the nozzle being provided with a capillary (22) concentrically enclosed by a bushing (26) that is in flow connection with a carrier gas feed channel (24) and wherein the bushing (26) as well as the capillary (22) limit an annular clearance (28) towards the chamber interior, the width (w) of said clearance being adjustable.

3. Device according to claim 2, **wherein** the bushing (26) and the capillary (22) are axially displaceable relative to each other.

4. Device according to claim 3, **wherein** the bushing (26) is displaceable in a hole (25) of the recipient bottom (14) and the capillary (22) is fixed in the bottom (14).

5. Device according to claim 2 or claim 3, **wherein** the bushing (26) has a flanged collar (27) whose inner diameter is conical and exceeds the outer diameter of the capillary (22) even where that is smallest.

6. Device according to any one of claims 2 to 5, **wherein** the geometry of the chamberside end of the capillary (22) and/or of the annular clearance (28) defines a spray angle (β) for the liquid feed.

7. Device according to any one of claims 2 to 6, **wherein** the capillary (22) has a maximum inner diameter of 250 µm.

8. Device according to any one of claims 2 to 7, **wherein** the outer diameter of the capillary (22) is at least five times its inner diameter.

9. Device according to any one of claims 1 to 8, **wherein** temperature sensors (41) and/or pressure sensors (42) are arranged in the chamber (18).

10. Device according to claim 9, **wherein** the temperature sensors (41) and/or the pressure sensors (42) are mounted on, fastened to or integrated into the chamber boundaries (12, 14, 16).

11. Device according to claim 9 or claim 10, **wherein** the width (w) of the annular clearance (28) is adjustable as a function of the or each output signal of the temperature sensors (41) and/or of the pressure sensors (42).

12. Device according to any one of claims 9 to 11, **wherein** the temperature sensors (41) and/or the pressure sensors (42) are integrated into an automatic control system whose control signal permits automatic adjustment of the width of the annular clearance (28).

13. Device according to any one of claims 1 to 12, **wherein** the outlet (30) and the atomizer (20) are arranged centrally in the recipient (10).

14. Device according to any one of claims 1 to 13, **wherein** the outlet (30) is arranged opposite the atomizer (20) in the lid (16) of the recipient (10).

15. Device according to any one of claims 1 to 14, **wherein** the outlet (30) is located beside the atomizer (20) in the bottom (14) of the recipient (10).

16. Device according to claim 15, **wherein** the outlet (30) runs in opposite direction to the channel (24) at the same height thereof.

17. Device according to any one of claims 1 to 16, **wherein** two identical recipients (10) form an intrgral structure such that the outlet (30) associated to a first chamber (18) is in alignment with the inlet channel (24) associated to a second chamber (40).

18. Device according to claim 17, **wherein** two or more recipients (10) are laterally connected with each other upside down so that the outlet (30) of a respective preceding recipient is directly and positively connected in a sealed manner with the inlet (24) of a respective subsequent recipient.

19. Device according to any one of claims 1 to 18, **wherein** the chamber (18; 40) is provided with several nozzles and capillaries (22), respectively, each connected to a liquid dosing device.

20. Device according to claim 19, **wherein** the nozzles and capillaries (22), respectively, are connected to different liquid dosing devices, the rate of flow in each dosing device being individually adjustable or controllable.

21. Device according to any one of claims 1 to 20, **wherein** the distance of the atomizer (20) from the boundary surfaces (12, 16) of the recipient (10) is adjustable in such manner that the mean liquid droplet size will be reduced from an initial value at the outlet of the atomizer (20) to less than one tenth of the initial value at the boundary surfaces (12, 16) of the heated zone (18).

22. Utilization of the device according to any one of claims 1 to 21 for obtaining defined mercury chloride gas/vapour mixtures by vaporizing aqueous mercury (II) chloride solutions, especially with concentrations in the order of magnitude of µg/m³.

## Revendications

1. Dispositif de vaporisation de liquide et pour la fabrication de mélanges gaz-vapeur d'une constitution définie dans un récipient (10) avec une chambre (18), dans laquelle débouche une tuyère pour l'alimentation dosée en liquide, avec une conduite d'alimentation en gaz porteur (24) permettant de rajouter un gaz porteur, et avec une conduite de sortie (30) par laquelle le mélange gaz-vapeur fabriqué peut être évacué, alors que la chambre (18) formant une salle de pulvérisation présente un chauffage extérieur à température contrôlée (34, 36) ainsi qu'un pulvérisateur (20), vers lequel on peut amener séparément un liquide et un gaz-porteur, **caractérisé en ce que** la distance entre le pulvérisateur (20) engagé dans la salle de pulvérisation (18) et les surfaces de limitation chauffées (12, 16) de celle-ci est réglable en direction de la pulvérisation (R).

2. Dispositif selon la revendication 1, **caractérisé en ce que** dans le pulvérisateur (20), l'arrivée du gai porteur (24, 26) est unie constructivement à la tuyère, cette dernière disposant d'un tube capillaire (22) qui est entouré concentriquement par une douille 26 reliée au flux du canal d'alimentation en gaz porteur (24), et la douille (26) et le tube capillaire (22) limitant une fente annulaire (28) dirigée vers l'intérieur de la chambre et dont la largeur (w) peut être changée par réglage.

3. Dispositif selon la revendication 2, **caractérisé en ce que** la douille (26) et le tube capillaire (22) peuvent être décalés axialement l'un par rapport à l'autre.

4. Dispositif selon la revendication 3, **caractérisé en ce que** la douille (26) est disposée de manière à pouvoir coulisser dans une perforation (25) du fond (14) du récipient et que le tube capillaire (22) est immobile dans le fond (14).

5. Dispositif selon la revendication 2 ou 3, **caractérisé en ce que** la douille (26) dispose d'une bride (27) avec un diamètre intérieur qui se rétrécit, mais qui à son point le plus étroit reste supérieur au diamètre extérieur du tube capillaire (22).

6. Dispositif selon l'une des revendications 2 à 5, **caractérisé en ce que** la géométrie de l'extrémité du tube capillaire (22) tournée vers la chambre et/ou la géométrie de la fente annulaire (28) définit un angle de pulvérisation (β) de l'alimentation en liquide.

7. Dispositif selon l'une des revendications 2 à 6, **caractérisé en ce que** le tube capillaire (22) a un diamètre intérieur maximal de 250 µm.

8. Dispositif selon l'une des revendications 2 à 7, **caractérisé en ce que** le diamètre extérieur du tube capillaire (22) est au moins cinq fois plus grand que son diamètre intérieur.

9. Dispositif selon l'une des revendications 1 à 8, **caractérisé en ce que** des détecteurs de température (41) et/ou des détecteurs de pression (42) sont disposés à l'intérieur de la chambre (18).

10. Dispositif selon la revendication 9, **caractérisé en ce que** les détecteurs de température (41) et/ou les détecteurs de pression (42) sont apposés ou installés sur les limites (12, 14, 16) de la chambre, ou qu'ils y sont intégrés.

11. Dispositif selon la revendication 9 ou 10, **caractérisé en ce que** la largeur (w) de la fente annulaire (28) est réglable en fonction du ou des signaux de sortie des détecteurs de température (41) et/ou des détecteurs de pression (42).

12. Dispositif selon l'une des revendications 9 à 11, **caractérisé en ce que** les détecteurs de température (41) et/ou les détecteurs de pression (42) sont intégrés dans un circuit de réglage, dont le signal de réglage permet de procéder automatiquement au réglage de la largeur de la fente annulaire (28).

13. Dispositif selon l'une des revendications 1 à 12, **caractérisé en ce que** la sortie (30) et le pulvérisateur (20) sont disposés au centre du récipient (10).

14. Dispositif selon l'une des revendications 1 à 13, **caractérisé en ce que** la sortie (30) est disposée en face du pulvérisateur (20), dans le couvercle (16) du récipient (10).

15. Dispositif selon l'une des revendications 1 à 14, **caractérisé en ce que** la sortie (30) se trouve à côté du pulvérisateur (20), dans le fond (14) du récipient (10).

16. Dispositif selon la revendication 15, **caractérisé en ce que** la sortie (30) se trouve sur la même hauteur que le canal (24), mais en sens opposé.

17. Dispositif selon l'une des revendications 1 à 16, **caractérisé en ce qu'**un assemblage constructif de deux récipients similaires (10) est réalisé de telle manière, que la sortie (30) prévue pour une première chambre (18) est alignée sur le canal d'entrée (24) prévu pour une seconde chambre (40).

18. Dispositif selon la revendication 17, **caractérisé en ce que** deux récipients (10) ou plus sont respectivement assemblés latéralement par le haut, si bien que la sortie respective (30) du récipient précédent est reliée directement, solidairement et étroitement, à l'entrée respective (24) du récipient suivant.

19. Dispositif selon l'une des revendications 1 à 18, **caractérisé en ce que** plusieurs tuyères ou tubes capillaires (22) reliés à un dispositif respectif de dosage du liquide se trouvent dans la chambre (18; 40).

20. Dispositif selon la revendication 19, **caractérisé en ce que** les tuyères ou tubes capillaires (22) sont reliés à des dispositifs variés de dosage du liquide, le débit de liquide pouvant être réglé ou commandé individuellement pour chaque dispositif de dosage du liquide.

21. Dispositif selon l'une des revendications 1 à 20, **caractérisé en ce que** la distance entre le pulvérisateur (20) et les surfaces de limitation (12, 16) du récipient (10) peut être réglée de telle façon que la taille moyenne des gouttelettes de liquide, depuis une valeur initiale à la sortie du pulvérisateur (20), sera réduite à moins du dixième de la valeur initiale en arrivant aux surfaces de limitation (12, 16) de la zone chauffée (18).

22. Utilisation du dispositif selon l'une des revendications 1 à 21 pour produire des mélanges gaz-vapeur de chlorure mercureux bien définis, en vaporisant des solutions aqueuses de chlorure mercurique, notamment avec des concentrations dans un orde de grandeur de µg/m³.
